# EUROPÄISCHE PATENTANMELDUNG

(11) **EP 2 623 170 A1**
(43) Veröffentlichungstag der Anmeldung: **07.08.2013**
(21) Anmeldenummer: 13000436.9
(22) Anmeldetag: 30.01.2013
(51) Int. Cl.: A63H 27/00, A63H 30/04, G05D 1/00

(54) **Flugsystem**

(30) Priorität: 03.02.2012 DE 102012002033
(71) Anmelder: Aibotix GmbH, 34131 Kassel (DE)
(72) Erfinder: Werner, Carsten, 43132 Kassel (DE); Chalas, Uwe, 34470 Breuna (DE)
(74) Vertreter: Walther, Walther & Hinz GbR

(57) **Zusammenfassung**

Flugsystem umfassend ein mit mindestens vier Rotoren ausgerüstetes Fluggerät mit einer Nutzlast, wobei eine Anzahl von Rotoren in die eine und eine Anzahl von Rotoren in die andere Richtung dreht, sowie eine Fernsteuerung, wobei das Fluggerät mit der Fernsteuerung über jeweils eine Sender-/Empfängereinheit in Daten übertragender Verbindung steht, wobei sowohl das Fluggerät als auch die Fernsteuerung jeweils eine mit der Sender-/Empfängereinheit verbundene Datenverarbeitungseinrichtung aufweisen, wobei sowohl das Fluggerät als auch die Fernsteuerung die gleichen Sensoren zur Fluglageerkennung aufweisen, wobei bei einer Winkeländerung der Fernsteuerung um ihre X- und/oder Y- und/oder Z-Achse, das Maß der Winkeländerung mit einer vorgebbaren Geschwindigkeit des Fluggerätes korreliert, wobei die entsprechend der Winkeländerung vorgegebene Geschwindigkeit als Sollwert der Datenverarbeitungseinrichtung des Fluggeräts und/oder der Fernsteuerung übermittelt wird, wobei der Istwert der Geschwindigkeit des Fluggerätes ermittelt wird, und mit dem Sollwert in der Datenverarbeitungseinrichtung verglichen wird, wobei durch eine Regelung die Drehzahl der Rotoren der Schub so weit geändert wird, bis der Sollwert der Geschwindigkeit mit der tatsächlichen Geschwindigkeit des Fluggeräts übereinstimmt.

## Beschreibung

Die Erfindung betrifft ein Flugsystem umfassend ein mit mindestens vier Rotoren ausgerüstetes Fluggerät mit einer Nutzlast, wobei eine Anzahl von Rotoren in die eine und eine Anzahl von Rotoren in die andere Richtung dreht, sowie eine Fernsteuerung.

Flugsysteme der eingangs genannten Art sind in der Form von Spielzeugen bekannt, wobei die Reichweite der Fluggeräte äußerst begrenzt ist, teilweise sogar nur innerhalb geschlossener Räume geflogen werden darf. Die Reichweite der Fernbedienung für die Kontrolle der Flugbewegungen ist eingeschränkt, ebenso wie auch die Flughöhe des Fluggerätes. Hierzu unterschiedlich sind Flugsysteme mit Fluggeräten, die kommerziellen Zwecken dienen.

Solche Flugsysteme umfassen ebenfalls ein Fluggerät und eine Fernbedienung, wobei das Fluggerät eine Nutzlast aufnehmen kann, z. B. eine Kamera. Das Flugsystem ist so ausgerüstet, dass die Entfernung des Fluggerätes, auch Copter genannt, nur durch die Reichweite der Sender- und Empfängereinheit begrenzt ist. Die Höhe, in die ein solches Fluggerät aufsteigen kann, beträgt bis zu mehreren hundert Metern.

Das heißt, ganz anders als im Spielzeugsektor, bei dem solche Fluggeräte nur eine Höhe von etwa 3 bis 5 m erreichen sollen, und auch nur auf Sicht, also in einer Entfernung von 20 bis 30 m geflogen werden, werden somit an ein Flugsystem, das kommerziellen Zwecken dienen soll, gänzlich andere Anforderungen gestellt. Dies betrifft nicht nur die Frage der Leistung der Sender- und Empfängereinheit, sondern auch die Frage der Steuerbarkeit eines solches Copters. Der Copter, der mindestens vier Rotoren aufweist, von denen einige in die eine und andere in die andere Richtung drehen, muss hierbei in der Form steuerbar sein, dass Informationen über die Fluglage und die Geschwindigkeit die an der Fernbedienung für den Copter vorgegeben werden, am Copter exakt übernommen werden. Das heißt, es muss sichergestellt sein, dass das, was an Solldaten an der Fernbedienung für den Copter eingestellt wird, von dem Antriebssystem des Copters eins zu eins umgesetzt wird.

Ein Flugsystem, das in der Lage ist, die von der Fernbedienung vorgegebenen Informationen unmittelbar eins zu eins umzusetzen und zwar insbesondere in Hinblick auf Geschwindigkeit und Richtung zeichnet sich durch die Merkmale des Anspruches 1 aus. Das beschriebene Flugsystem ist allerdings nicht nur in der Lage, die durch die Fernbedienung vorgegebenen Sollwerte in Istwerte des Fluggerätes in im Wesentlichen identischer Weise umzusetzen, sondern ist darüber hinaus auch in der Lage, das Fluggerät durch Verschwenken der Fernbedienung um die X-, Y- und Z-Achse intuitiv zu steuern. Das heißt, dass die Bewegungen der Fernbedienung unmittelbar ihre Entsprechung in der Bewegung des Fluggerätes erfahren. Hierzu ist erforderlich, dass sowohl das Fluggerät als auch die Fernbedienung entsprechende Sensoren zur Erkennung der Fluglage aufweisen, wie z. B. Acceleratoren und Gyroskope. Sowohl die Acceleratoren als auch die Gyroskope, von denen jeweils vorzugsweise drei sowohl in der Fernsteuerung als auch im Fluggerät vorgesehen sind, sind jeweils in Richtung einer Achse im karthesischen Koordinatensystem ausgerichtet. In diesem Zusammenhang bleibt auf Folgendes hinzuweisen: Theoretisch denkbar wäre die Ermittlung der Fluglage des Copters bereits mit drei Acceleratoren und einem Gyroskop. Die Genauigkeit der Bestimmung der Fluglage erhöht sich aber signifikant, wenn zusätzlich zu den drei Acceleratoren drei Gyroskope vorgesehen sind. Die Gyroskope und die Acceleratoren stellen eine IMU (Initial Measurement Unit) dar. Diese IMU erlaubt die Bestimmung von translatorischen und rotatorischen Bewegungen. Um eine Messung in alle drei Raumrichtungen vorzunehmen, werden vorzugsweise Drei-Achsen-Sensoren eingesetzt, deren drei Achsen orthogonal zueinanderstehen. Die Bestimmung der Fluglage durch eine sogenannte IMU-Einheit ist wesentliche Voraussetzung, um den Copter über die Fernbedienung fliegen zu können. In diesem Zusammenhang ist vorgesehen, dass die Datenverarbeitungseinrichtungen sowohl des Copters als auch vorteilhaft der Fernbedienung eine Regelung aufweisen. So ist nach einem vorteilhaften Merkmal der Erfindung die Regelung in der Datenverarbeitungseinrichtung des Fluggeräts implementiert.

Das bedeutet, dass sowohl die Regelung der Geschwindigkeit als auch der Flugrichtung nach Erhalt der Vorgabewerte durch die Fernbedienung in der Datenverarbeitungseinrichtung des Fluggerätes stattfindet. Dies hat den Vorteil, dass das Fluggerät wesentlich schneller reagiert, als bei einer Ausführungsform, bei der die Regelung für das Fluggerät in der Fernbedienung vorgenommen würde. Allerdings benötigt die Regelung in der Datenverarbeitungseinrichtung eine erhebliche Rechenkapazität, was zusätzliches Gewicht bedeutet, was wiederum bei entsprechend schwacher Antriebsleistung des Fluggerätes dazu führen kann, dass dennoch die Regelung in der Fernbedienung angeordnet wird; d. h. es erfolgt die Verarbeitung der Daten in der Datenverarbeitungseinrichtung der Fernbedienung. Das heißt aber auch, dass die Daten zur Ermittlung der Istgeschwindigkeit des Copters über Grund, die beispielsweise mittels GPS, Radarsensoren oder optischer Verfahren, wie dem "optical flow-Verfahren", ermittelt werden, ebenso wie die Daten zur Fluglageerkennung vom Copter zur Datenverarbeitungseinrichtung der Fernsteuerung übermittelt werden, wobei die Datenverarbeitungseinrichtung der Fernsteuerung durch Soll-Ist-Vergleich die zur Regelung erforderlichen Werte für Schub und Fluglage berechnet, und die berechneten Schub- und Fluglagewerte zur Datenverarbeitungseinrichtung des Fluggerätes übermittelt, wobei die Datenverarbeitungseinrichtung des Fluggerätes diese Vorgaben für Fluglage und Schub in die nötigen Drehzahlen der einzelnen Rotoren umsetzt. In diesem Zusammenhang bleibt auf Folgendes hinzuweisen:

Ein Copter, der aus einem Gehäuse mit mindestens vier, vorzugsweise jedoch sechs Rotoren besteht, wird zum Flug in eine Richtung entsprechend in diese Richtung geneigt. Das heißt, einzelne Rotoren des Copters laufen langsamer als andere Rotoren, wobei in dieser Fluglage zur Erzeugung des erforderlichen Schubes die Geschwindigkeit der Rotoren allerdings aufgeregelt wird. Das heißt, dass wenn der Neigungswinkel der Fernbedienung ein Maß für die Geschwindigkeit des Copters ist, die entsprechend dem Neigungswinkel vorgegebenen Geschwindigkeitswerte in der Datenverarbeitungseinrichtung, sowohl des Copters als auch der Fernbedienung, hinterlegt sind. Insofern kann der Copter durch Bewegung der Fernbedienung um die X- und Y-Achse in die entsprechende Richtung gelenkt werden. Das bedeutet aber auch, wie dies bereits ausgeführt worden ist, dass sowohl der Copter als auch die Fernbedienung über ein entsprechendes Koordinatensystem verfügen.

Nach einem weiteren Merkmal der Erfindung ist vorgesehen, dass der Copter sich um seine eigene Achse zu drehen vermag. Zur Ermittlung der Rotationsgeschwindigkeit als Istgeschwindigkeit dienen hier insbesondere die Gyroskope als Fluglagesensoren. Auch hier gilt, dass die Änderung der Winkellage der Fernbedienung um die Z-Achse ein Maß für die Rotationsgeschwindigkeit des Fluggerätes um die eigene Achse darstellt.

Nach einem weiteren Merkmal der Erfindung weist die Datenverarbeitungseinrichtung zur Ausrichtung des Fluggerätes in horizontaler Lage eine Lageregelung auf, die mit den Sensoren zur Fluglageerkennung und den Rotoren verbunden ist. Es wurde bereits darauf hingewiesen, dass die Fluggeräte kommerziellen Zwecken dienen, unter anderem dazu, mithilfe einer unter dem Fluggerät angeordneten Kamera, Bilder und auch bewegte Bilder, z. B. in Form eines Videos, aufzunehmen. Hierfür ist erforderlich, dass das Fluggerät möglichst ruhig gehalten wird, auch um der Kamera die Möglichkeit zu geben einen Gegenstand zu fokussieren. Um eine solche Lageregelung, insbesondere in horizontaler Lage vorzunehmen, dienen ebenfalls die Sensoren zur Fluglageerkennung nämlich die bereits zuvor erwähnten Acceleratoren und Gyroskope. Die Regelung erfolgt im Einzelnen durch die Regelung der Rotationsgeschwindigkeit der einzelnen Rotoren.

Nach einem weiteren besonderen Merkmal der Erfindung ist vorgesehen, dass die Sensoren zur Fluglageerkennung durch mindestens ein Magnetometer ergänzt werden, d. h., ein solches Magnetometer als Kompass eröffnet die Möglichkeit den Grad der Abweichung der Ausrichtung des Magnetometers nach Norden zu erfassen.

Die Abweichung kann dann wieder in alle drei Raumrichtungen ermittelt werden, wobei in Kombination mit den bereits zuvor erwähnten Acceleratoren und Gyroskopen insbesondere durch das Zusammenspiel der Gyroskope, der Acceleratoren und des mindestens einen Magnetometers eine verhältnismäßig genaue Ausrichtung des Fluggerätes möglich ist. Zur Bestimmung der Fluglage des Fluggerätes bilden die im Fluggerät und in der Fernbedienung vorhandenen Gyroskope und Acceleratoren, wie bereits dargelegt, eine sogenannte IMU-Einheit (Inertial Measurement Unit). Hiermit werden rotarische und translatorische Bewegungen ermittelt. Um in alle drei Raumrichtungen messen zu können, sind sogenannte Drei-Achsen-Sensoren als Gyroskope und Acceleratoren vorgesehen, die drei orthogonal zueinanderstehende sensitive Achsen aufweisen. Die Genauigkeit der Bestimmung der Fluglage kann schlussendlich noch dadurch erhöht werden, dass zusätzlich noch die Daten eines Drei-Achsen-Magnetometers hinzugezogen werden. Ein solches System, umfassend sowohl einen magnetischen Sensor zur Bestimmung der Winkellage und der Gravitation, als auch Gyroskope und Acceleratoren, sind im Stand der Technik als MARG-Systeme (MARG= Magnetic Angular Rate and Gravity) bekannt. Solche MARG-Systeme sind in der Lage, eine vollständige Bestimmung der Orientierung des Fluggerätes oder der Fernbedienung relativ zu der Richtung der Gravitation des Magnetfelds der Erde vorzunehmen.

In diesem Zusammenhang wird auf folgende Veröffentlichung verwiesen: An efficient orientation filter for inertial and inertial/magnetic sensor arrays, Sebastian O. H. Madgwick, April 30, 2010.

Die Fernsteuerung selbst ist nach einem weiteren Merkmal der Erfindung mit einem berührungsempfindlichen Bildschirm als Eingabe- und Anzeigeeinrichtung ausgebildet. Über diesen berührungsempfindlichen Bildschirm, d. h., durch die Eingabeeinrichtung kann insofern beispielsweise die Steig- und/oder Sinkgeschwindigkeit vorgegeben werden. Das heißt, insbesondere in Bezug auf die Sinkgeschwindigkeit des Fluggerätes gilt, dass diese ab einer bestimmten minimalen Höhe über Grund einen bestimmten Wert nicht überschreitet, um schlussendlich zu verhindern, dass das Fluggerät am Boden zerschellt. Insofern weist das Fluggerät auch Sensoren zur Ermittlung der Höhe auf, die beispielsweise als Ultraschallsensoren und als Sensoren zur Ermittlung des Luftdruckes ausgebildet sind. Ultraschallsensoren arbeiten hierbei zufriedenstellend bis zu Höhen von ca. 5 bis 10 m über Grund, wohingegen Luftdrucksensoren in Bereichen arbeiten, die über denen der Ultraschallsensoren liegen, wobei ein bestimmter Überlappungsbereich erforderlich ist, um in jedem Fall eine genaue Messung vorlegen zu können.

Nach einem weiteren Merkmal der Erfindung zeigt das Fluggerät seitlich Abstandssensoren, um seitliche Hindernisse erkennen zu können bzw. auch den Abstand zu den Hindernissen zu ermitteln. Solche Hindernisse werden auf dem berührungsempfindlichen Bildschirm der Eingabeeinrichtung dargestellt.

Das Fluggerät selbst umfasst mehrere Betriebsmodi. Ein Betriebsmodus zeichnet sich dadurch aus, dass die Flugrichtungen des Fluggerätes durch das Koordinatensystem der Fernbedienung vorgegeben sind. Hierbei ist die X-, Y- und die Z-Achse in der Fernbedienung fest eingegeben. Die Lage dieses Koordinatensystems wird dem Fluggerät vorgegeben. Das bedeutet ganz konkret, dass wenn die Fernbedienung um die X-Achse verschwenkt wird, also beispielsweise aus Sicht des Piloten nach vorne geschwenkt wird, der Copter auch in die entsprechende Richtung steuert. Hieraus wird deutlich, dass der Pilot durch Bewegung der Fernbedienung immer genau vorherbestimmen kann, in welche Richtung sich das Fluggerät in Bewegung setzen wird.

Zu diesem Betriebsmodus unterschiedlich ist ein zweiter Betriebsmodus, bei dem die Flugrichtung des Fluggerätes durch ein Koordinatensystem im Fluggerät vorgegeben ist (First-Person-View-System). Hierbei erfolgt die Steuerung derart, dass das Koordinatensystem des Copters die Flugrichtung in X-, Y- und Z-Richtung vorgibt. Die Ausrichtung des Koordinatensystems im Copter kann hierbei durchaus unterschiedlich zu dem in der Fernbedienung sein. Das heißt konkret, dass beispielsweise dann, wenn die Fernbedienung nach vorn geschwenkt wird, das Fluggerät z. B. in seitlicher Richtung seine Geschwindigkeit erhöht. Das heißt, die Lage des Koordinatensystems im Fluggerät ändert sich nicht, sondern bleibt starr, genauso wie das Koordinatensystem sich in der Fernbedienung nicht ändert.

Nach einem weiteren Merkmal der Erfindung ist vorgesehen, dass das Fluggerät mindestens einen GPS-Empfänger aufweist, der mit der Datenverarbeitungseinrichtung des Fluggerätes und/oder der Fernsteuerung in Verbindung steht. Durch ein GPS ist es möglich, eine Ortsbestimmung des Copters während des Fluges vorzunehmen. Nach einem weiteren Merkmal der Erfindung ist vorgesehen, dass die Fernsteuerung mindestens einen GPS-Empfänger aufweist, der mit der Datenverarbeitungseinrichtung in der Fernsteuerung und dem Copter in Verbindung steht. Hierdurch besteht die Möglichkeit eine Ortsbestimmung des Fluggerätes relativ zur Fernbedienung vorzunehmen, also beispielsweise die Entfernung des Fluggerätes von der Fernbedienung zu bestimmen.

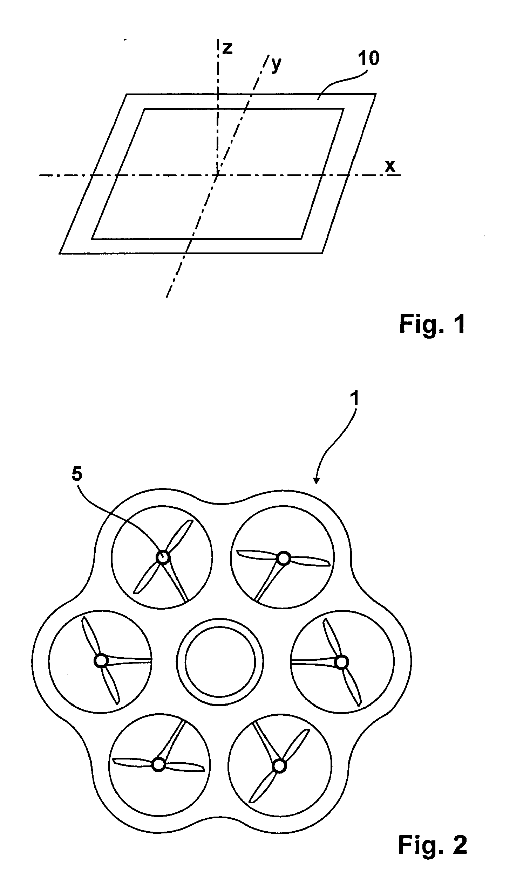

- Fig. 1: zeigt schematisch die drei Achsen einer Fernbedienung, wobei die Fernbedienung nach Art eines Tablet-Computers ausgebildet ist;
- Fig. 2: zeigt schematisch das Fluggerät in einer Ansicht von oben;
- Fig. 3: zeigt eine Seitenansicht des Fluggeräts.

Die Fernbedienung 10 ist vorteilhaft in der Form eines Tablet-Computers ausgebildet; d. h. die Fernbedienung weist einen berührungsempfindlichen Bildschirm auf, der der Eingabe von Daten, aber auch der Anzeige des Bildes der Kamera am Copter dient. Der Tablet-Computer weist einen berührungsempfindlichen Bildschirm auf, was bedeutet, dass über diesen Bildschirm mit dem Fluggerät kommuniziert werden kann. Zusätzlich findet die Steuerung des Copters durch Bewegung des Tablet-Computers um die drei Achsen des karthesischen Koordinatensystems statt, wobei z. B. eine Bewegung des Tablet-Computers um die X-Achse eine Flugbewegung des Copters in die Y-Richtung bewirkt, wobei mit zunehmender Neigung die Geschwindigkeit des Copters zunimmt. Gleiches gilt bei Bewegung des Tablet-Computers um die Y-Achse. Somit ist nunmehr eine Bewegung in zwei Raumrichtungen möglich. Eine Bewegung des Fluggerätes um seine eigene Achse, also die Z-Achse, wird dadurch bewirkt, dass der Tablet-Computer ebenfalls um die Z-Achse gedreht wird, wobei das Maß der Verdrehung mit der Rotationsgeschwindigkeit des Copters korreliert. Die Steighöhe bzw. die Steiggeschwindigkeit und die Sinkgeschwindigkeit werden unmittelbar über den Bildschirm eingegeben, beispielsweise in der Form, dass bei einer kurzen gleitenden Bewegung eines Fingers auf dem Bildschirm nach vorne/hinten eine entsprechende langsame Auf-/Abwärtsfahrt des Fluggerätes erfolgt. Lange gleitende Fingerbewegungen bewirken hingegen ein schnelles Aufsteigen bzw Absteigen des Copters.

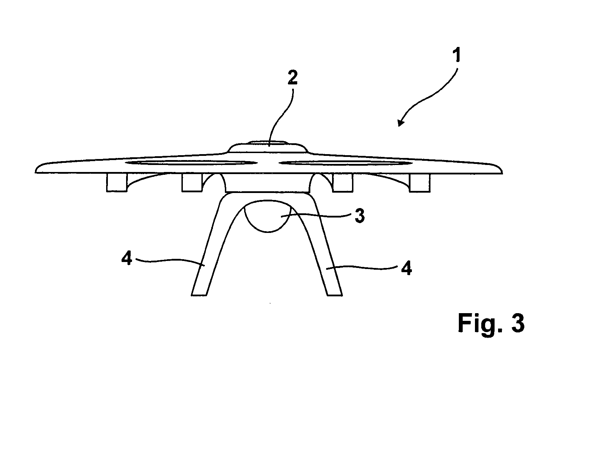

Fig. 3 zeigt den Copter in einer Ansicht von oben, wobei der Copter sechs Rotoren 5 aufweist. Mittig zeigt der Copter 1 eine Einhausung 2 zur Aufnahme der Datenverarbeitungseinrichtung einschließlich der Fluglagesensoren. In der Kanzel 3 unter dem Copter befindet sich beispielsweise die Kamera. Die Batterien zum Antrieb der Elektromotoren und auch zum Betrieb der Datenverarbeitungseinrichtung sowie der Sender und Empfänger befinden sich in der Einhausung 2. Der Copter weist darüber hinaus drei Beine 4 auf, die federelastisch nachgiebig ausgebildet sind, um ein weiches Landen des Copters zu ermöglichen.

Wie bereits ausgeführt, weist sowohl der Copter als auch die Fernbedienung mehrere, insbesondere drei Acceleratoren und Gyroskope oder anders ausgedrückt Drei-Achsen-Sensoren als Gyroskope und Acceleratoren auf, wobei diese Sensoren ein IMU-System bilden. Vorteilhaft ist darüber hinaus vorgesehen, dass der Copter und auch die Fernbedienung ein Drei-Achsen-Magnetometer aufweisen, um zu einer genaueren Bestimmung der Orientierung des Copters die Daten des Magnetometers mitberücksichtigen zu können. Diese Fluglagesensoren bilden hierbei dann das MARG-System.

Die Steuerung des Fluggerätes erfolgt nun in einer Form, wie sie beispielsweise im Folgenden dargestellt ist. Hierbei ist ein Betriebsmodus eingestellt, bei dem das Koordinatensystem der Fernbedienung für die Steuerung des Copters dominant ist.

Der Tablet-Computer wird z. B. um die X-Achse um einen bestimmten Betrag, beispielsweise 15° geneigt. Geht man davon aus, dass sich das Fluggerät bereits in einer bestimmten Höhe in der Luft befindet, und setzt dies als Ausgangsposition voraus, dann wird sich der Copter leicht schräg stellen, was im Einzelnen dadurch geschieht, dass ein Teil der Motoren der Rotoren gedrosselt wird, wohingegen bei einem anderen Teil die Leistung erhöht wird. Die Folge hiervon ist, dass sich der Copter senkrecht zur X-Achse des Tablet-Computers fortbewegt. Die jeweilige Geschwindigkeit in dieser Richtung korrespondiert mit der Winkellage des Tablet-Computers. Die Korrelationen zwischen Winkel und Geschwindigkeit sind z. B. in der Fernbedienung hinterlegt. Gleiches geschieht bei seitlicher Bewegung des Tablet-Computers. Zur Rotation des Fluggerätes um die eigene Achse wird der Tablet-Computer ebenfalls um seine eigene Achse gedreht. Das Maß der Drehung ist hierbei das Maß der Rotationsgeschwindigkeit des Fluggerätes. Zum Starten und Landen des Fluggerätes wird wie folgt vorgegangen:
Die Startgeschwindigkeit wird dem Copter über den Tablet-Computer durch Eingabe über den berührungsempfindlichen Bildschirm vorgegeben. Gleichfalls kann vorgegeben werden, bis zu welcher Maximalhöhe der Copter steigen soll.

Anders stellt sich die Sachlage dar, wenn der Copter landen soll. Der Copter weist, wie an anderer Stelle erläutert, Sensoren zur Höhenbestimmung über Grund auf, insbesondere einen Ultraschallsensor und einen Druckluftsensor. Der Ultraschallsensor ist hierbei für die Bestimmung der Höhe im Nahbereich, d. h. bis etwa 10 m vorgesehen, wobei darüber hinaus die Bestimmung der Höhe durch den Luftdrucksensor erfolgt. Auch die Sinkgeschwindigkeit kann über den Tablet-Computer eingegeben werden, wobei jedoch hier zur Sicherheit bei Erreichen einer bestimmten Mindesthöhe die Sinkgeschwindigkeit einen bestimmten Wert nicht überschreiten soll, um eine Zerstörung des Fluggerätes bei Auftreffen auf den Boden zu verhindern. Die beiden Höhensensoren Ultraschallsensor und Druckluftsensor arbeiten in unterschiedlichen Höhenbereichen, überlappen einander jedoch. Das heißt, dass bei Unterschreiten einer bestimmten Mindesthöhe der Ultraschallsensor zur Höhenbestimmung zum Einsatz gelangt, während zur Bestimmung größerer Höhen der Druckluftsensor zum Einsatz kommt. Derartige Sensoren weist vorteilhaft auch die Fernbedienung auf. Dies deshalb, um eine Bestimmung der Höhe über Grund mithilfe des Druckluftsensors vornehmen zu können. Alternativ kann dafür aber auch der Luftdruck über Grund beim Startvorgang ermittelt und gespeichert werden.

Für den Flugbetrieb sind, wie ausgeführt, mindestens zwei unterschiedliche Modi vorgesehen. Ein erster Modus zeichnet sich, wie dies zuvor beschrieben wurde, dadurch aus, dass die Lage des karthesischen Koordinatensystems des Tablet-Computers immer mit der Lage des karthesischen Koordinatensystems im Fluggerät übereinstimmt. Das heißt, dass dann, wenn der Computer beispielsweise um seine Z-Achse gedreht wird, entsprechend auch das Koordinatensystem im Fluggerät wandert. Das bedeutet allerdings auch, dass eine Bewegung des Tablet-Computers um eine bestimmte Achse immer unmittelbar auch eine Bewegung des Fluggeräts in die Schwenkrichtung bewirkt.

Ein zweiter Betriebsmodus zeichnet sich dadurch aus, dass die Lage des karthesischen Koordinatensystems im Fluggerät unabhängig ist von der Lage des Tablet-Computers. Das heißt, die Lage des Koordinatensystems ist dem Fluggerät einmal vorgegeben, wobei dann, wenn der Tablet-Computer um die X-Achse bewegt wird, aus Sicht des Piloten an dem Tablet-Computer das Fluggerät möglicherweise eine Bewegung in Richtung der X-Achse durchführt. Dieser Betriebsmodus ist auch unter dem Begriff "First-Person-View-System" bekannt. Vorgesehen kann des Weiteren sein, dass das Fluggerät mindestens ein GPS-Empfänger aufweist. Hiermit ist die Position des Fluggerätes bestimmbar, und auf dem Tablet-Computer anzeigbar. Wenn des Weiteren auch die Fernsteuerung ein GPS-Empfänger aufweist, so ist auch eine Positionsbestimmung des Fluggerätes relativ zum Tablet-Computer möglich. Das heißt, man kann erkennen, wie weit das Fluggerät vom Tablet-Computer entfernt ist.

Das Fluggerät selbst weist an seiner Stirnseite Abstandssensoren auf, durch die verhindert wird, dass das Fluggerät an Gegenstände anstößt. Abstandssensoren sind als Ultraschall- oder Radarsensoren ausgebildet, und messen den Abstand des Fluggerätes zu möglichen Hindernissen. Auch hier gilt, dass die Geschwindigkeit in Richtung auf das Hindernis ab einem bestimmten Mindestabstand derart reduziert wird, dass eine Gefährdung des Fluggerätes nicht möglich ist, selbst wenn das Fluggerät mit dem Hindernis kollidiert.

### Bezugszeichenliste:

- 1: Copter
- 2: Einhausung
- 3: Kanzel
- 4: Beine
- 5: Rotoren
- 10: Fernbedienung

## Patentansprüche

1. Flugsystem umfassend ein mit mindestens vier Rotoren ausgerüstetes Fluggerät mit einer Nutzlast, wobei eine Anzahl von Rotoren in die eine und eine Anzahl von Rotoren in die andere Richtung dreht, sowie eine Fernsteuerung, wobei das Fluggerät mit der Fernsteuerung über jeweils eine Sender-/Empfängereinheit in Daten übertragender Verbindung steht, wobei sowohl das Fluggerät als auch die Fernsteuerung jeweils eine mit der Sender-/Empfängereinheit verbundene Datenverarbeitungseinrichtung aufweisen, wobei sowohl das Fluggerät als auch die Fernsteuerung die gleichen Sensoren zur Fluglageerkennung aufweisen,
wobei bei einer Winkeländerung der Fernsteuerung um ihre X- und/oder Y- und/oder Z-Achse, das Maß der Winkeländerung mit einer vorgebbaren Geschwindigkeit des Fluggerätes korreliert,
wobei die entsprechend der Winkeländerung vorgegebene Geschwindigkeit als Sollwert der Datenverarbeitungseinrichtung des Fluggeräts und/oder der Fernsteuerung übermittelt wird,
wobei der Istwert der Geschwindigkeit des Fluggerätes ermittelt wird, und mit dem Sollwert in der Datenverarbeitungseinrichtung verglichen wird,
wobei durch eine Regelung die Drehzahl der Rotoren der Schub so weit geändert wird, bis der Sollwert der Geschwindigkeit mit der tatsächlichen Geschwindigkeit des Fluggeräts übereinstimmt.

2. Flugsystem nach dem Anspruch 1,
**dadurch gekennzeichnet,**
**dass** die Ermittlung der Ist-Geschwindigkeit des Fluggeräts über Grund mittels GPS, Radarsensoren oder optischer Verfahren, wie dem Optical-Flow-Verfahren vorgenommen wird.

3. Flugsystem nach Anspruch 1 oder 2,
**dadurch gekennzeichnet,**
**dass** die Daten zur Ermittlung der Ist-Geschwindigkeit des Fluggerätes an die Fernsteuerung übermittelt werden, die Datenverarbeitungseinrichtung der Fernsteuerung durch Soll-ist-Vergleich die zur Regelung nötigen Werte für Schub und Fluglage berechnet, die berechneten Schub- und Fluglagewerte zur Datenverarbeitungseinrichtung des Fluggerätes übermittelt werden, wobei die Datenverarbeitungseinrichtung des Fluggerätes diese Vorgaben für Fluglage und Schub in die nötigen Drehzahlen der einzelnen Rotoren umsetzt.

4. Flugsystem nach einem der voranstehenden Ansprüche,
**dadurch gekennzeichnet,**
**dass** die entsprechend der Winkeländerung der Fernsteuerung vorgegebene Soll-Geschwindigkeit zur Datenverarbeitungseinrichtung des Fluggerätes übertragen wird, wobei in der Datenverarbeitungseinrichtung des Fluggerätes die Regelung implementiert ist, welche die Drehzahl der Rotoren so weit ändert, bis der Sollwert der Geschwindigkeit mit dem übermitteltem Istwert übereinstimmt.

5. Flugsystem nach einem der voranstehenden Ansprüche,
**dadurch gekennzeichnet,**
**dass** die Ermittlung der aktuellen Rotationsgeschwindigkeit des Fluggerätes um die Z-Achse mit Hilfe von Fluglagesensoren erfolgt.

6. Flugsystem nach einem der voranstehenden Ansprüche,
**dadurch gekennzeichnet,**
**dass** die Datenverarbeitungseinrichtung zur Ausrichtung des Fluggerätes in horizontaler Lage eine Lageregelung aufweist, die mit den Sensoren zur Fluglageerkennung und den Rotoren verbunden ist.

7. Flugsystem nach einem der voranstehenden Ansprüche,
**dadurch gekennzeichnet,**
**dass** die Sensoren zur Fluglageerkennung Acceleratoren und/oder Gyroskope umfassen.

8. Flugsystem nach Anspruch 7,
**dadurch gekennzeichnet,**
**dass** sowohl in dem Fluggerät als auch in der Fernbedienung drei Acceleratoren angeordnet sind, die jeweils in eine Raumrichtung ausgerichtet sind, wobei sowohl in dem Fluggerät als auch in der Fernsteuerung mindestens ein, vorzugsweise jedoch drei Gyroskope angeordnet sind, wobei jeder Raumrichtung ein Gyroskop zugeordnet ist und wobei die Sensoren zur Fluglageerkennung mindestens ein Magnetometer umfassen.

9. Flugsystem nach einem der voranstehenden Ansprüche,
**dadurch gekennzeichnet,**
**dass** die Fernsteuerung einen berührungsempfindlichen Bildschirm als Eingabe- und Anzeigeeinrichtung aufweist, wobei über die Eingabeeinrichtung die Steig- und/oder Sinkgeschwindigkeit vorgebbar ist.

10. Flugsystem nach Anspruch 9,
**dadurch gekennzeichnet,**
**dass** die Sinkgeschwindigkeit des Fluggeräts ab einer bestimmten Höhe einen vorgebbaren Wert nicht übersteigt.

11. Flugsystem nach einem der voranstehenden Ansprüche,
**dadurch gekennzeichnet,**
**dass** das Flugsystem mehrere Betriebsmodi aufweist.

12. Flugsystem nach Anspruch 11,
**dadurch gekennzeichnet,**
**dass** in einem ersten Betriebsmodus die Flugrichtungen des Fluggerätes durch das Koordinatensystem der Fernbedienung vorgegeben sind.

13. Flugsystem nach Anspruch 11,
**dadurch gekennzeichnet,**
**dass** in einem zweiten Betriebsmodus die Flugrichtungen des Fluggerätes durch ein Koordinatensystem im Fluggerät vorgegeben sind (First-Person-View-System).

14. Flugsystem nach einem der voranstehenden Ansprüche,
**dadurch gekennzeichnet,**
**dass** das Fluggerät mindestens einen GPS-Empfänger aufweist, der mit der Datenverarbeitungseinrichtung des Fluggerätes und/oder der Fernsteuerung in Verbindung steht.

15. Flugsystem nach einem der voranstehenden Ansprüche,
**dadurch gekennzeichnet,**
**dass** die Fernsteuerung mindestens einen GPS-Empfänger aufweist, der mit der Datenverarbeitungseinrichtung in der Fernsteuerung in Verbindung steht.
